# EUROPÄISCHE PATENTSCHRIFT

(11) **EP 3 765 888 B1**
(45) Veröffentlichungstag und Bekanntmachung des Hinweises auf die Patenterteilung: **11.01.2023**
(21) Anmeldenummer: 19711323.6
(22) Anmeldetag: 13.03.2019
(51) Int. Cl.: G02B 27/01

(54) **VERFAHREN ZUR BENUTZERINDIVIDUELLEN KALIBRIERUNG EINER AUF DEN KOPF EINES BENUTZERS AUFSETZBAREN ANZEIGEVORRICHTUNG FÜR EINE AUGMENTIERTE DARSTELLUNG**
METHOD FOR THE USER-SPECIFIC CALIBRATION OF A DISPLAY APPARATUS, WEARABLE ON THE HEAD OF A USER, FOR AN AUGMENTED PRESENTATION
PROCÉDÉ D'ÉTALONNAGE SPÉCIFIQUE À L'UTILISATEUR D'UN DISPOSITIF D'AFFICHAGE POUR UN AFFICHAGE AUGMENTÉ QUI PEUT ETRE PLACÉ SUR LA TÊTE D'UN UTILISATEUR

(30) Priorität: 14.03.2018 DE 102018105917
(43) Veröffentlichungstag der Anmeldung: 20.01.2021
(73) Patentinhaber: tooz technologies GmbH, 73430 Aalen (DE)
(72) Erfinder: ALVAREZ DIEZ, Cristina, 73447 Oberkochen (DE); DAVIDKOV, Momchil, 73431 Aalen (DE); WEGENDT, Holger, 73563 Mögglingen (DE)
(74) Vertreter: Patentanwälte Geyer, Fehners & Partner mbB
(86) Internationale Anmeldenummer: PCT/EP2019/056325
(87) Internationale Veröffentlichungsnummer: WO 2019/175269

(56) Entgegenhaltungen:
- EP-A1- 3 001 148
- EP-A1- 3 252 566
- EP-A1- 3 355 100
- EP-A1- 3 355 102
- EP-A1- 3 355 104
- US-A1- 2013 120 224
- US-A1- 2017 122 725

## Beschreibung

Die vorliegende Erfindung betrifft ein Verfahren zur benutzerindividuellen Kalibrierung einer auf den Kopf eines Benutzers aufsetzbaren Anzeigevorrichtung für eine augmentierte Darstellung.

Bei Anzeigevorrichtungen für eine augmentierte Darstellung ist es wichtig, dass die genaue Position der Anzeigevorrichtung auf dem Kopf des Benutzers und somit die Position der virtuellen Bildebene relativ zu den Augen des Benutzers bekannt ist, damit die für die augmentierte Darstellung gewünschte exakte Überlagerung des virtuell dargestellten Bildes mit der realen Umgebung erreicht werden kann.

Head-mounded-Displays, bei denen eine benutzerdefinierte Kalibrierung vorgenommen wird, sind aus der EP 3 252 566 A1, US 2013/120224 A1 und der DE20 2016 104 179 U1 bekannt.

Ausgehend hiervon soll daher ein Verfahren zur benutzerindividuellen Kalibrierung einer auf den Kopf eines Benutzers aufsetzbaren Anzeigevorrichtung für eine augmentierte Darstellung bereitgestellt werden, mit dem eine genaue und individuelle Kalibrierung leicht durchführbar ist.

Die Erfindung ist im Anspruch 1 angegeben. Vorteilhafte Weiterbildungen sind in den abhängigen Ansprüchen angegeben.

Da bei dem erfindungsgemäßen Verfahren der Grundkalibrierungsablauf durchgeführt wird, der in der Regel nur bei der erstmaligen Benutzung der Anzeigevorrichtung durch einen Benutzer durchzuführen ist, kann mit diesem Ablauf eine gute Kalibrierung erzieht werden, da dabei die Position des Auges in allen drei Raumrichtungen relativ zur Anzeigevorrichtung berücksichtigt wird.

Der Feinkalibrierungsablauf kann schnell und gut durchgeführt werden. Es können bei dem Feinkalibrierungsablauf die bereits aus dem Grundkalibrierungsablauf gewonnenen Justierdaten verwendet werden, wodurch der virtuelle Marker schon sehr nahe an der vorgegebenen Stelle des realen Objektes für den Benutzer wahrnehmbar ist. Dies führt zu der gewünschten schnellen und guten Kalibrierbarkeit.

Bei dem erfindungsgemäßen Verfahren können zur Ermittlung der Positionierangaben Positionieranweisungen ausgewertet werden, die der Benutzer über eine Eingabeschnittstelle der Anzeigevorrichtung eingegeben hat, um den virtuellen Marker für sich in möglichst exakter Überlagerung mit der vorgegebenen Stelle des realen Objektes zu bringen. Die Eingabeschnittstelle kann z.B. als berührungsempfindliche Fläche der Anzeigevorrichtung, beispielsweise an der Haltevorrichtung, als Computermaus, als separates Touchpad, als separate Tastatur, als Sprachsteuerung, als Gestensteuerung etc. ausgebildet sein.

Ferner ist es möglich, dass zur Ermittlung der Positionierangaben Aufnahmen der Kamera ausgewertet werden. Dies kann insbesondere dann eingesetzt werden, wenn der Benutzer durch Bewegen des realen Objektes die möglichst exakte Überlagerung mit dem virtuellen Marker herstellt. Dies kann besonders gut genutzt werden, wenn die Eingabeschnittstelle zum Beispiel als Sprachsteuerung ausgebildet ist, so dass der Benutzer beide Hände frei bewegen kann.

Ferner ist es möglich, den virtuellen Marker zum Beispiel durch Kopfbewegungen oder sonstige Interaktionen mit der Eingabeschnittstelle in Überlappung mit dem echten Zielobjekt zu bringen.

Bei dem erfindungsgemäßen Verfahren können im Schritt B2) des Feinkalibrierungsablaufs die Positionierangaben für mindestens zwei verschiedene vorgegebene Stellen des realen Objektes bei der Ableitung der Korrekturdaten berücksichtigt werden. Damit kann eine höhere Kalibiergenauigkeit erreicht werden.

Ferner ist es bei dem erfindungsgemäßen Verfahren möglich, im Grundkalibrierungsablauf mindestens eine Aufnahme des Benutzers mit aufgesetzter Anzeigevorrichtung zur Ermittlung der Position des mindestens einen Auges relativ zur Anzeigevorrichtung auszuwerten. Insbesondere kann die mindestens eine Aufnahme mittels der Kamera aufgenommen werden. Dazu wird bevorzugt eine Aufnahme des Benutzers über einen Spiegel durchgeführt.

Bei dem erfindungsgemäßen Verfahren kann die im Grundkalibrierungsablauf ermittelte Position des mindestens einen Auges relativ zur Anzeigevorrichtung und/oder können die Positionierangaben gemäß Schritt B2) des Feinkalibrierungsablaufs genutzt werden, um eine blickwinkelabhängige Aberration durch eine entgegengesetzte Vorverzerrung bei der Bilderzeugung zu verringern.

Ferner ist es möglich, die im Grundkalibrierungsablauf ermittelte Position des mindestens einen Auges relativ zur Anzeigevorrichtung und/oder die Positionierangaben gemäß Schritt B2) des Feinkalibrierungsablaufs zu nutzen, um einen bei der Bilderzeugung auftretenden Parallaxe-Fehler aufgrund der unterschiedlichen Positionen von Auge und Kamera zu verringern.

Für die augmentierte Darstellung werden die Aufnahmen der Kamera (bevorzugt laufend) ausgewertet, so dass eine gewünschte Überlagerung des erzeugten virtuellen Bildes mit der realen Umgebung für den Benutzer erzielt wird.

Wenn hier von der Position des Auges die Rede ist, so ist bevorzugt der Augenmittelpunkt gemeint, welcher selbst bei Blickrichtungsänderungen relativ zum Kopf unverändert bleibt. Zur Berechnung des Augenmittelpunktes kann aus den Aufnahmen das Zentrum der Pupille (in 3D), die Blickrichtung ermittelt und unter bestimmte Annahmen (z.B. Augendurchmesser von 24 mm) dann der Augenmittelpunkt ausgerechnet werden.

Typischerweise kann man beim Design von einer Standartpupillendistanz von 65 mm und symmetrischem Abstand der Augen zur Nase ausgehen. Damit wird für einen großen Teil der Bevölkerung ein relativ gutes Ergebnis zwischen der Position, an dem das virtuelle Objekt im realen Raum dargestellt werden soll, und der Position, an der sie der Benutzer tatsächlich sieht, erreicht. Je größer die tatsächliche Abweichung der Pupillendistanz des jeweiligen Benutzers von der angenommenen Standartpupillendistanz ist, umso mehr weicht die Darstellung des virtuellen Objektes von der gewünschten Stelle ab. Gleiches gilt bei einer Verschiebung in vertikaler Richtung durch unterschiedliche Tragepositionen der Anzeigevorrichtung auf der Nase des Benutzers.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbeispiele können miteinander kombiniert werden, sofern nichts anderes angegeben ist. Modifikationen oder Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Von den Figuren zeigen:
- Fig. 1: eine schematische perspektivische Darstellung eines Ausführungsbeispiels der erfindungsgemäßen Anzeigevorrichtung;
- Fig. 2: eine vergrößerte seitliche Detailansicht von Fig. 1 zzgl. augmentierter Darstellung;,
- Fig. 3: ein Ablaufdiagramm zur Beschreibung des erfindungsgemäßen Kalibrierverfahrens gemäß eines Ausführungsbeispiels;
- Fig. 4: ein detailliertes Ablaufdiagramm des Grundkalibrierungsablaufs von Fig. 3, und
- Fig. 5: ein detailliertes Ablaufdiagramm des Feinkalibrierungsablaufs von Fig. 3.

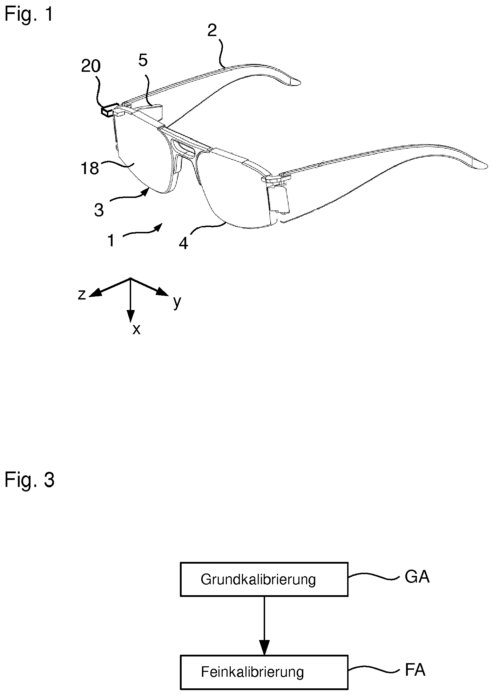

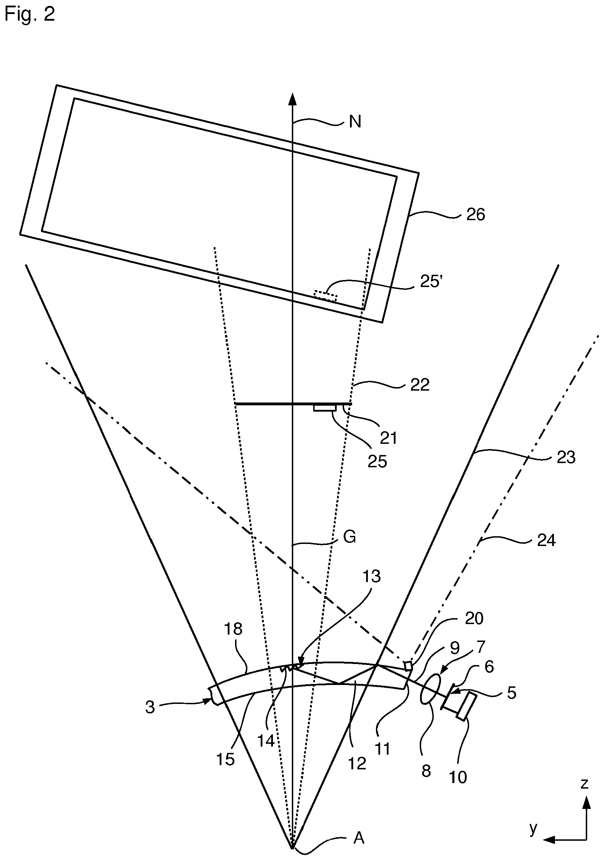

Nachfolgend wird ein Ausführungsbeispiel (bzw. eine Ausführungsform) des erfindungsgemäßen Verfahrens zur benutzerindividuellen Kalibrierung einer auf den Kopf eines Benutzers aufsetzbaren Anzeigevorrichtung 1 für eine augmentierte Darstellung beschrieben. Dazu soll zunächst eine Ausführungsform der Anzeigevorrichtung 1 unter Bezugnahme auf Fig. 1 und 2 beschrieben werden.

Die in Fig. 1 und 2 gezeigte Ausführungsform der Anzeigevorrichtung 1 umfasst eine auf den Kopf eines Benutzers aufsetzbare Haltevorrichtung 2, die z.B. in Art eines Brillengestells ausgebildet sein kann, sowie ein erstes und ein zweites Brillenglas 3, 4, die an der Haltevorrichtung 2 befestigt sind. Die Haltevorrichtung 2 mit den Brillengläsern 3, 4 kann z.B. als Sportbrille, Sonnenbrille und/oder Brille zur Korrektur einer Fehlsichtigkeit ausgebildet sein, wobei dem Benutzer über das erste Brillenglas 3 ein virtuelles Bild (im Folgenden auch virtuelles Objekt genannt) in sein Gesichtsfeld eingespiegelt werden kann, wie nachfolgend beschrieben wird. Das virtuelle Bild kann mittels Reflexion, Beugung und/oder Transmission in das Gesichtsfeld des Benutzers eingekoppelt werden. Der Benutzer kann dann das virtuelle Bild in Überlagerung mit der Umgebung wahrnehmen, so dass die gewünschte augmentierte Darstellung realisiert werden kann.

Zur Darstellung des virtuellen Bildes umfasst die Anzeigevorrichtung 1 ein Bilderzeugungsmodul 5, das im Bereich des rechten Brillenbügels der Haltevorrichtung 2 angeordnet sein kann, wie in Fig. 1 schematisch dargestellt ist. Das Bilderzeugungsmodul 5 kann ein flächiges Bilderzeugungsmodul 6 (Fig. 2), wie z.B. einen OLED-, einen LCD- oder einen LCoS-Chip oder eine Kippspiegelmatrix, mit einer Vielzahl von z.B. in Zeilen und Spalten angeordneten Pixeln, oder ein Modul, das ein oder mehrere (schnell) gescannte Lichtstrahlen erzeugt, aufweisen.

Wie am besten aus der vergrößerten, schematischen Teilschnittansicht in Fig. 2 ersichtlich ist, weist die Anzeigevorrichtung 1 eine Abbildungsoptik 7 auf, die ein zwischen dem Bilderzeugungselement 6 bzw. dem Bildgeber 6 und dem ersten Brillenglas 3 angeordnetes Optikelement 8 enthält. Des Weiteren dient das erste Brillenglas 3 selbst auch als Teil der Abbildungsoptik 7.

Von jedem Pixel des Bildgebers 6 kann ein Lichtbündel 9 ausgehen. Durch eine entsprechende Ansteuerung der Pixel des Bildgebers 6 mittels einer Steuereinheit 10, die Teil des Bilderzeugungsmoduls 5 sein kann, kann das gewünschte Bild erzeugt werden. In Fig. 2 ist stellvertretend für die Lichtbündel 9 der Strahlengang eines Lichtstrahls eingezeichnet, so dass nachfolgend auch vom Lichtstrahl 9 die Rede ist.

Der vom Bildgeber 6 ausgehende Lichtstrahl 9 läuft durch das Optikelement 8 und tritt über einen Einkoppelabschnitt 11 in das erste Brillenglas 3 ein und wird in diesem entlang eines Lichtführungskanals 12 bis zu einem Auskoppelabschnitt 13 geführt. Der Auskoppelabschnitt 13 weist mindestens eine reflektive Umlenkfläche 14 auf, an der eine Reflexion der Lichtstrahlen 9 in Richtung zu einer Rückseite 15 des ersten Brillenglases 3 stattfindet, so dass die Lichtstrahlen 9 über die Rückseite 15 aus dem ersten Brillenglas 3 austreten.

Somit kann ein Benutzer, wenn er die erfindungsgemäße Anzeigevorrichtung 1 bestimmungsgemäß auf dem Kopf trägt, das mittels des Bildgebers 6 erzeugte Bild als virtuelles Bild wahrnehmen, wenn er durch den Auskoppelabschnitt 13 hindurch blickt. Bei der hier beschriebenen Ausführungsform ist jede reflektive Umlenkfläche 14 als teilreflektive Umlenkfläche 14 ausgebildet, so dass durch die reflektiven Umlenkflächen 14 auch Licht der Umgebung transmittiert wird. Somit kann der Benutzer das virtuelle Bild bzw. das virtuelle Objekt in Überlagerung mit der Umgebung wahrnehmen.

Wie in der schematischen Darstellung in Fig. 2 gezeigt ist, ist sowohl die Rückseite 15 als auch die Vorderseite 18 des ersten Brillenglases 3 gekrümmt ausgebildet. Es ist jedoch auch möglich, dass die Rückseite 15 und/oder die Vorderseite 18 plan ausgebildet sind/ist.

Die Führung der Lichtbündel 9 im Lichtführungskanal 12 kann z.B. durch innere Totalreflexion an der Vorderseite 18 und der Rückseite 15 erfolgen. Es ist auch möglich, dass die Vorderseite 18 und/oder die Rückseite 15 im Bereich des Lichtführungskanals eine reflektierende oder teilreflektierende Beschichtung aufweisen/aufweist, um die gewünschte Lichtführung zu bewirken. Ferner ist es möglich, dass im ersten Brillenglas eine reflektierende oder teilreflektierende Schicht ausgebildet ist, die die Vorderseite 18 oder die Rückseite 15 im Bereich des Lichtführungskanals 12 als reflektierende Fläche ersetzt. Es können auch zwei reflektierende Schichten oder teilreflektierende Schichten im Brillenglas 3 ausgebildet sein, die dann den Lichtführungskanal 12 bilden.

Die Anzeigevorrichtung 1 umfasst ferner eine in Fig. 1 und 2 schematisch dargestellte Kamera 20, die die Umgebung vor dem Brillenglas aufnimmt und der Steuereinheit 10 zuführt. Die Anzeigevorrichtung 1 kann auch mehrere Kameras 20 aufweisen und ist hier so ausgebildet, dass das virtuelle Bild in einer angenehmen Beobachtungsdistanz von z.B. 1,5 m in einer virtuellen Abbildungsebene 21 der Anzeigevorrichtung 1 für den Benutzer wahrnehmbar ist. In Fig. 2 ist die virtuelle Abbildungsebene 21 zusammen mit dem Blickfeld 22 (mit z.B. 20°x30°), das von der Anzeigevorrichtung 1 bedient wird, schematisch und nicht maßstabsgetreu dargestellt. Ferner sind das natürliche Blickfeld 23 (mit z.B. 120°x90°) des entsprechenden Auges A des Benutzers sowie das Bildfeld 24 (mit z.B. 45°x55°), das die Kamera 20 aufnehmen kann, eingezeichnet.

Bei dem in Fig. 2 gezeigten Beispiel wird dem Benutzer z.B. während der Montage eines Schrankes ein Scharnier 25 als virtuelles Bild dargestellt. Die Position der Darstellung des virtuellen Bildes ist so gewählt, dass der Benutzer das virtuell dargestellte Scharnier an der Position einer Schranktür 26 sieht, an der das Scharnier zu montieren ist. Diese überlagerte Ansicht des virtuellen Scharniers mit der Schranktür 26 ist in Fig. 2 mit dem Bezugszeichen 25' gekennzeichnet. Damit diese überlagerte Darstellung positionsgenau möglich ist, wird die Aufnahme der Schranktür 26 mittels der Kamera 20 ausgewertet und basierend darauf dann die Position des virtuell darzustellenden Scharniers 25 ermittelt und eine entsprechende Darstellung durchgeführt. Wenn die erfindungsgemäße Anzeigevorrichtung 1 nur eine einzige Kamera 20 und sonst keine weiteren unterstützenden Sensoren zur dreidimensionalen Erfassung von Objekten aufweist, muss das reale Objekt (hier die Schranktür 26) inklusive ihrer Maße bekannt sein und via Bildverarbeitungsalgorithmen detektiert werden.

Ein weiterer wichtiger Punkt für eine gute überlagerte Darstellung ist die Kenntnis der Position des Auges A relativ zur Anzeigevorrichtung 1 und damit relativ zur virtuellen Abbildungsebene 21. Je genauer dies bekannt ist, umso besser und genauer kann die überlagerte Darstellung realisiert werden.

Die Lage des Auges A relativ zur Anzeigevorrichtung 1 und insbesondere relativ zur virtuellen Abbildungsebene 21 variiert einerseits von Benutzer zu Benutzer. Andererseits hängt sie auch noch bei einem Benutzer von der exakten Positionierung der Haltevorrichtung 2 am Kopf des Benutzers ab, die von Aufsetzen zu Aufsetzen auch noch gewisse Variationen aufweisen kann.

Die benutzerindividuelle Kalibrierung der Anzeigevorrichtung 1 kann wie folgt durchgeführt werden.

In einem Grundkalibrierungsablauf GA (Fig. 3) wird im auf dem Kopf des Benutzers aufgesetzten Zustand der Haltevorrichtung 2 die Position des Auges A in allen drei Raumrichtungen (also x-, y- und z-Richtung) relativ zur Anzeigevorrichtung 1 ermittelt. Diese Ermittlung der Position kann beispielsweise so durchgeführt werden, dass vom Benutzer, der die Anzeigevorrichtung 1 auf dem Kopf trägt, ein oder mehrere Fotos (aus z.B. einer effektiven Entfernung von 1,5 m) und verschiedenen Richtungen aufgenommen werden. Das bzw. die Fotos können dabei mittels der Kamera 20 über einen Spiegel oder mit einer separaten Kamera (z.B. einer Smartphone-Kamera) aufgenommen werden. Es ist ferner möglich, dass der Benutzer, der die Anzeigevorrichtung 1 auf dem Kopf trägt, zusätzlich aufgefordert wird, z.B. den Blick auf die Kamera zu richten oder einen fernen Punkt zu fixieren.

Die Bestimmung dieser Maße kann zum Beispiel so erfolgen, wie dies in den europäischen Patentanmeldungen Nr. 17153559.4 sowie Nr. 17153556.0 beschrieben ist. Dies bringt den Vorteil mit sich, dass (in der bevorzugten Ausführungsform) die Firmware der Anzeigevorrichtung 1 die 3-dimensionalen Größen der Anzeigevorrichtung 1 (z.B. durch CAD-Daten) und insbesondere die Lage der Kamera zu den Brillengläsern bereits kennt und dies nicht erst aus den Aufnahmen ermittelt werden muss.

Das bzw. die Fotos werden zur Steuereinheit 10 übertragen, die basierend auf dem Foto bzw. den Fotos und der Kenntnis der Maße der Anzeigevorrichtung 1 die notwendigen Justierdaten (wie z.B. Pupillenabstand, Hornhautscheitelabstand, Vorneigung, Durchblickpunkte, etc.) berechnet.

Die Justierdaten werden dann in der Anzeigevorrichtung 1 (beispielsweise in der Steuereinheit 10 selbst) abgelegt, wobei das Bilderzeugungsmodul 5 die gewünschten Bilder unter Berücksichtigung der Justierdaten erzeugt. Die Justierdaten können beispielsweise in der berechneten Form (also z.B. als Pupillenabstand, Hornhautscheitelabstand, Vorneigung, Durchblickpunkte, etc.) abgelegt werden. In diesem Fall muss dann bei Bilderzeugung eine entsprechende Umrechnung durchgeführt werden. Es ist jedoch auch möglich, die Justierdaten gleich in einer umgerechneten Form für die Anzeigevorrichtung 1 und das Bilderzeugungsmodul 5 abzulegen, so dass bei der Bilderzeugung keine weitere Umrechnung der Justierdaten erforderlich ist und diese sofort verwendet werden können.

In der einfachsten Implementierung sind dies zwei Offset-Werte pro Auge, in denen das virtuelle Objekt in seiner gleichen Größe und Form angezeigt werden kann wie der Standarddarstellung (also in der Darstellung, in der von einer "Standard"- oder "Preset"-Position der Augen (symmetrische Augen, Pupillendistanz 65mm usw.) ausgegangen wird), aber in den zwei Dimensionen der virtuellen Bildebene um Delta_x und Delta_y versetzt angezeigt werden müssen. Bei höheren Abweichung der Augenlage vom "Standart-Wert" und / oder bei Brillenträgern, die z.B. ihre Stärken-Gläser zusätzlich zur/unter der Datenbrille tragen, kann durch Auftreten von Aberration eine komplizierte Umrechnung nötig sein, bei der z.B. die einzelne Bildpunkte des ursprünglichen (d.h. der für den "Standart user") virtuellen Bildes, unterschiedliche Offsets erfahren.

Natürlich muss die Berechnung der Justierdaten nicht in der Steuereinheit 10 durchgeführt werden. Es ist auch möglich, dass diese Berechnung in einer separaten Recheneinheit mit einem separaten Rechenmodul durchgeführt wird. Beispielsweise kann dies ein entfernter Server sein.

Bei der Aufnahme des bzw. der Fotos ist zu beachten, dass die Fotos in der Regel unter einem schrägen Winkel gemacht werden. Dies ist bei der Berechnung der Justierdaten zu berücksichtigen. Da die Maße der Anzeigevorrichtung 1 bekannt sind, kann an dem bzw. den Fotos erkannt werden, unter welchem Winkel die Aufnahme erfolgte.

Wenn die Aufnahme mittels der Kamera 20 durchgeführt wird, ist die Position der Kamera 20 relativ zur Haltevorrichtung 2 und somit die Perspektive bei der Aufnahme bei der Berechnung der Justierdaten zu berücksichtigen.

Mittels dieses Grundkalibrierungsablaufes wird somit eine individuelle Anpassung der auf den Kopf des Benutzers aufsetzbaren Anzeigevorrichtung 1 durchgeführt. Man kann diesen Grundkalibrierungsablauf auch als Zentrierungsablauf bezeichnen. Der Grundkalibrierungs- bzw. Zentrierungsablauf kann z.B. vor dem erstmaligen Benutzen der Anzeigevorrichtung (z.B. direkt beim Kauf) durchgeführt werden.

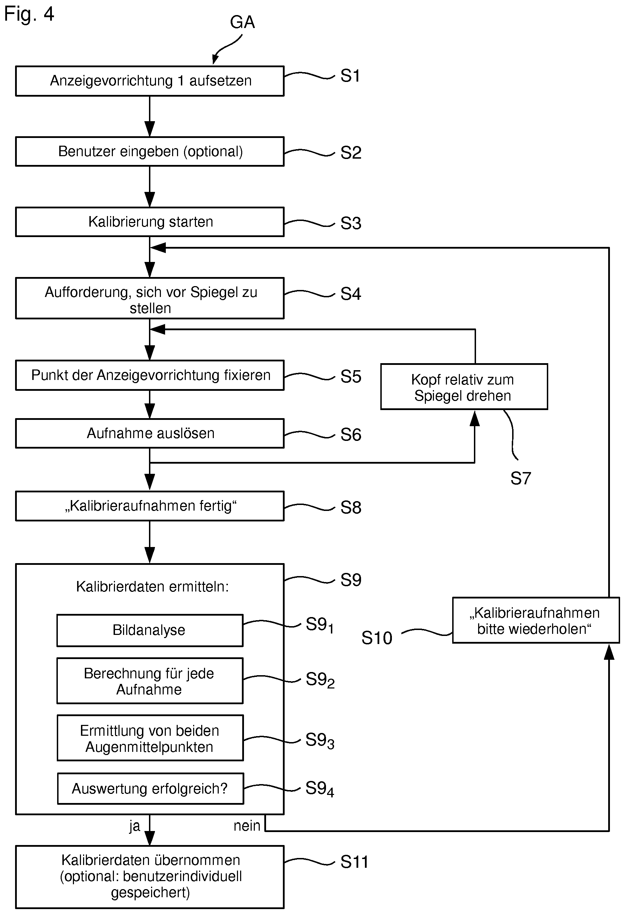

Nachfolgend wird unter Bezugnahme auf Fig. 4 ein möglicher Grundkalibrierungsablauf detailliert Schritt für Schritt beschrieben.

In Schritt S1 wird die Anzeigevorrichtung 1 auf den Kopf des Benutzers aufgesetzt. In der Regel wird der Benutzer die Anzeigevorrichtung 1 selbst aufsetzen.

Im optionalen Schritt S2 kann der Anzeigevorrichtung 1 zum Beispiel über ihre Eingabeschnittstelle mitgeteilt werden, welcher Benutzter gerade die Anzeigevorrichtung 1 auf dem Kopf trägt. Die Anzeigevorrichtung 1 kann dazu einen entsprechenden internen Speicher aufweisen, in dem die Kalibrierdaten für verschiedene Benutzer individuell abgelegt sind.

Im Schritt S3 startet der Benutzer den Kalibrierungsablauf.

Im Schritt S4 wird der Benutzer von der Anzeigevorrichtung 1 aufgefordert, sich vor einen Spiegel zu stellen, wobei der Abstand zum Spiegel z.B. kleiner als die Armlänge des Benutzers sein soll. Diese Aufforderung kann dem Benutzer beispielsweise optisch und/oder akustisch mittels der Anzeigevorrichtung 1 mitgeteilt werden.

Im Schritt S5 fixiert der Benutzer einen definierten Punkt der Anzeigevorrichtung 1. Dies kann dem Benutzer wieder mittels der Anzeigevorrichtung 1 mitgeteilt werden. Bei dem definierten Punkt kann es sich zum Beispiel um die Kamera 20 handeln, sodass der Benutzer die Kamera 20 betrachtet.

Im Schritt S6 löst der Benutzer eine Aufnahme auf.

Wenn mehrere Aufnahmen gewünscht oder eventuell durch die Anzeigeeinrichtung 1 gefordert sind, wird der Benutzer im Schritt S7 dazu aufgefordert. Diese Aufforderung kann beispielsweise beinhalten, dass der Benutzer seine Kopfposition relativ zum Spiegel etwas ändern (zum Beispiel drehen) soll. Der Schritt S7 führt wieder zum Schritt S5, sodass die Schritte S5 und S6 erneut durchlaufen werden.

Sobald ausreichend Aufnahmen durchgeführt wurden, wird der Benutzer im Schritt S8 von der Anzeigevorrichtung informiert, dass die Kalibrieraufnahme bzw. Kalibrieraufnahmen fertig gestellt sind.

Im Schritt S9 werden dann die Kalibrierdaten ermittelt.

Dazu kann im Schritt S9₁ eine Bildanalyse mit Detektion der Anzeigevorrichtung 1 und den Augen des Benutzers in allen durchgeführten Aufnahmen erfolgen.

Im Schritt S9₂ wird dann für jede Aufnahme jeweils die Lage der Anzeigevorrichtung relativ zum Spiegel und die Blickrichtung (Pupille - Fixierpunkt) berechnet.

Im Schritt S9₃ werden dann die Augenmittelpunkte von beiden Augen ermittelt.

Im Schritt S9₄ wird ermittelt, ob eine erfolgreiche Auswertung vorliegt.

Wenn dies nicht der Fall ist, wird mittels des Schrittes S10 der Benutzer aufgefordert, die Kalibrieraufnahmen zu wiederholen, wobei der Schritt S10 zum Schritt S4 zurückführt.

Wenn die Auswertung als erfolgreich eingestuft wird, geht der Ablauf zum Schritt S11 über, in dem die Kalibrierdaten übernommen werden. Wenn im Schritt S2 einen Benutzer eingegeben wurde, werden sie für diesen Benutzer individuell gespeichert.

Da ein Benutzer die Anzeigevorrichtung in der Regel bei einem erneuten Aufsetzen die Anzeigevorrichtung 1 nicht exakt gleich aufsetzt (was z. B. die Stelle auf der Nase und somit der relativen Position in vertikaler Richtung betrifft) wie beim Durchführen des Grundkalibrierungsablaufs, wird erfindungsgemäß auch ein Feinkalibrierungsablauf FA (Fig. 3) angeboten, der auch als augmentierte Kalibrierung bezeichnet werden kann.

Im aufgesetzten Zustand der Anzeigevorrichtung 1 soll der Benutzer im Feinkalibrierungsablauf ein reales Objekt betrachten, das als Referenzobjekt bezeichnet wird. Dabei kann es sich z.B. um einen Ausdruck auf einem Blatt Papier mit bekanntem Muster, ein Würfel das Etui der Anzeigevorrichtung 1 oder ein sonstiges reales und dem System der Anzeigevorrichtung 1 bekanntes Objekt handeln. In diesem Fall ist kein Spiegel mehr notwendig. Wenn nun der Benutzer das Objekt betrachtet, wird mittels des Bilderzeugungsmoduls 5 ein virtueller Marker in der virtuellen Abbildungsebene 21 so erzeugt, dass der virtuelle Marker möglichst mit einer vorgegebenen Stelle des realen Objektes überlappt. Dabei kann es sich z.B. um eine Ecke des Würfels oder zum Beispiel um eine eindeutige Stelle auf einem auf einem Blatt Papier ausgedruckten Muster, dass man auf einem Tisch liegen hat, handeln. Die Positionierung des virtuellen Markers wird dabei unter Berücksichtigung der in der Anzeigevorrichtung 1 abgelegten Justierdaten durchgeführt. D. h. der Marker wird zunächst an einer Stelle im virtuellen Bild angezeigt, als wäre die Anzeigevorrichtung 1 genau gleich aufgesetzt worden, wie bei der Grundkalibrierung. Bei dem virtuellen Marker kann es sich z.B. um ein Fadenkreuz handeln.

Wenn eine exakte Überlagerung des Markers mit der vorbestimmten Stelle vorliegt, bestätigt dies der Benutzer durch eine entsprechende Eingabe über die Eingabeschnittstelle. Sollte keine exakte Überlagerung für den Benutzer vorliegen, kann er über die Eingabeschnittstelle Positionieranweisungen eingeben, die den Marker für den Benutzer so verschieben, dass er dann in exakter Überlagerung mit der vorgegebenen Stelle des realen Objekts erscheint. Wenn dies der Fall ist, bestätigt dies der Benutzer über die Eingabeschnittstelle.

Basierend auf den eingegebenen Positionieranweisungen kann die Steuereinheit 10 dann die Justierdaten entsprechend korrigieren und dadurch neue Justierdaten erzeugen, die wiederum in der Steuereinheit 10 abgelegt werden. Die neuen Justierdaten werden dann als Justierdaten bei der Bilderzeugung mittels des Bilderzeugungsmoduls 5 benutzt, so dass eine möglichst optimale augmentierte Darstellung möglich ist.

Der Benutzer kann immer dann einen Feinkalibrierungsablauf durchführen, wenn für ihn die augmentierte Darstellung zu ungenau ist. Somit kann er in einfacher Art und Weise eine sehr schnelle optimale Kalibrierung durchführen.

Bei dem Feinkalibrierungsablauf kann z.B. die Achse oder die Achsen, entlang der oder derer sich die Position der Anzeigevorrichtung 1 typischerweise stärker verändert, empfindlicher eingestellt werden als in der bzw. den anderen Achsen. Z.B. verrutscht eine Anzeigevorrichtung 1 mit einer brillenartigen Haltevorrichtung 2 meistens stärker in vertikaler Richtung als in horizontaler Richtung. Somit wird die Verstellbarkeit in vertikaler Richtung empfindlicher eingestellt als in horizontaler Richtung.

Da bei dem Feinkalibrierungsablauf die Position des virtuellen Markers basierend auf den vorliegenden Justierdaten durchgeführt wird, wird der virtuelle Marker in der Regel relativ nahe an der vorgegebenen Stelle für den Benutzer sichtbar sein, selbst wenn der Benutzer die Anzeigevorrichtung 1 etwas anders aufsetzt als während der Grundkalibrierung. Dies führt dazu, dass eine schnelle und gute Feinkalibrierung möglich ist.

In dem Feinkalibrierungsablauf können auch mehrere vorgegebene Stellen nacheinander abgearbeitet werden. Für jede der vorgegebenen Stellen ist der virtuelle Marker entsprechend zu positionieren. Die Korrekturrichtungen können gemittelt und dieser Mittelwert kann als Feinkalibrierung übernommen werden. Dies führt zu einem sehr guten Justierergebnis.

Alternativ kann der Feinkalibrierungsablauf auch so durchgeführt werden, dass der Benutzer das reale Objekt so im Raum positioniert, dass die vorgegebene Stelle des realen Objektes mit dem dargestellten virtuellen Marker zusammenfällt. Es wird also nicht der virtuelle Marker bewegt, sondern das reale Objekt. Da das reale Objekt über die Kamera 20 aufgenommen wird, kann daraus errechnet werden, wie die Justierdaten zu korrigieren sind. Dies ist z. B. bei einem User-Interface (bzw. einer Eingabeschnittstelle) mit Sprachsteuerung attraktiv.

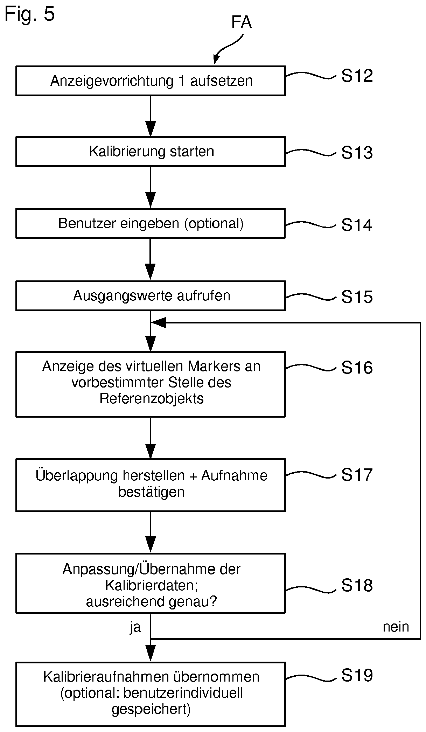

Nachfolgend wird unter Bezugnahme auf Fig. 5 ein möglicher Feinkalibrierungsablauf FA detailliert Schritt für Schritt beschrieben.

Im Schritt S12 setzt der Benutzer die Anzeigevorrichtung 1 auf.

Im Schritt S13 startet der Benutzer die Feinkalibrierungsroutine. Dies kann beispielsweise durch eine spezielle Sprachanweisung oder eine sonstige Eingabe über die Eingabeschnittstelle erfolgen.

Im optionalen Schritt S14 kann der Anzeigevorrichtung 1 (z. B. über die Eingabeschnittstelle) mitgeteilt werden, welcher Benutzer die Anzeigevorrichtung gerade auf dem Kopf trägt.

Im Schritt S15 ruft die Steuereinheit 10 die in ihr abgelegten Justierdaten auf. Sofern schon ein Grundkalibrierungsablauf und/oder ein Feinkalibrierungsablauf durchgeführt wurde, liegen entsprechend ermittelte Justierdaten (evtl. für den individuellen Benutzer, sofern dies berücksichtigt wurde) vor. Ansonsten weisen die Justierdaten Vorgabewerte auf. Somit liegen für den nachfolgenden Schritt Ausgangswerte vor.

Im Schritt S16 sucht die Anzeigevorrichtung über die Live-Bilder der Kamera 20 das Referenzobjekt und zeigt den virtuellen Marker an. Dabei werden die gerade vorliegenden Justierdaten (die Ausgangswerte) bei Darstellung des Markers berücksichtigt.

Im Schritt S17 kann der Benutzer bestätigen, dass der Marker an der korrekten Stelle angezeigt wird. Wenn dies nicht der Fall ist, wird der Benutzer im Schritt S17 zunächst noch die gewünschte Überlappung des Markers mit der entsprechenden Stelle des Referenzobjektes erzeugen. Dazu kann der Benutzer das Referenzobjekt bewegen und/oder über entsprechende Eingaben über die Eingabeschnittstelle den Marker bewegen.

Sobald die gewünschte Überlappung vorliegt, werden im Schritt S18 korrigierte Justierdaten berechnet bzw. erzeugt und in der Steuereinheit 10 abgelegt.

Wenn die gewünschte Genauigkeit bei der Überlagerung nicht vorliegt, kann der Ablauf zum Schritt S16 zurückspringen, sodass die Schritte S16 bis S18 wiederholt werden, wobei jedoch schon die korrigierten Justierdaten bei der Darstellung des Markers verwendet werden.

Wenn eine ausreichende Genauigkeit vorliegt, folgt auf den Schritt S18 der Schritt S19, in dem die zuletzt korrigierten Justierdaten in der Steuereinheit 10 abgelegt sind. Dies kann optional für einen individuellen Benutzer der Fall sein, wenn dies vorgesehen ist.

Der Schritt S15 kann auch so realisiert sein, dass zunächst überprüft wird, ob bereits eine Grundkalibrierung durchgeführt wurde. Wenn dies nicht der Fall ist, wird mit der Grundkalibrierung ab Schritt S2 fortgefahren. Nach dem Schritt S11 des Grundkalibrierungsablaufes wird dann der Schritt S16 ausgeführt.

Natürlich kann der Feinkalibrierungsablauf auch unabhängig vom Grundkalibrierungsanlauf durchgeführt werden. Wie bereits erwähnt, kann im Schritt S15 des Feinkalibrierungsablaufs von Vorgabewerten für die Justierdaten ausgegangen werden.

Ferner ist es möglich, eine Korrektur oder Minimierung von Aberrationen durchzuführen. So ist es bei auf den Kopf eines Benutzers aufsetzbaren Anzeigevorrichtungen bekannt, chromatische Aberrationen oder Verzeichnungen der Abbildungsoptik durch eine entsprechende vorverzerrte Bilderzeugung vorzukorrigieren. Wenn nun das virtuelle Bild nicht wie in Fig. 2 und somit nicht in Nullrichtung N eingeblendet wird, sondern unter einem schrägen Winkel, z.B. seitlich unten, schaut das Auge des Benutzers zum Sehen des erzeugten Bildes in Richtung der Einblendrichtung. Für einen Benutzer, der selbst keine Brille benötigt, wird das Bild prinzipiell zumindest ohne größere Aberration oder aberrationsfrei angezeigt.

Dies ist aber nicht der Fall für einen Brillenträger mit z. B. Einstärkengläsern, da das einzelne Glas für die Nullrichtung N optimiert ist. Bei schräger Durchsicht tritt einen Verzerrung des betrachteten Objektes auf. Wenn die Lage des Auges relativ zur Anzeigevorrichtung 1 bekannt ist, weiß man auch, unter welchem Winkel das Auge durch das Brillenglas 3 schaut.

Wenn es sich bei der Anzeigevorrichtung 1 um eine Anzeigevorrichtung 1 mit einem Einschub für Einstärkengläser handelt, ist die Position des Einstärkenglases relativ zur Anzeigevorrichtung eindeutig und bekannt. Unter Berücksichtigung der Dioptrien-Stärke des Einstärkenglases und des Materials des Einstärkenglases kann die Glasdicke (für eine Berechnung der Aberrationen in erster Ordnung) in der Durchblicksrichtung berechnet werden. Für eine bessere Berechnung kann die Glasform auf der Durchblicksfläche (also zwei zweidimensionale Teilflächen beider Glasflächen) verwendet werden. Diese Daten können beispielsweise vom Lieferanten des Einstärkenglases stammen oder unter bestimmten Annahmen (z.B. typische Glasformen für Einstärkengläser) in der Anzeigevorrichtung berechnet werden.

Bei Anzeigevorrichtungen, bei denen der Benutzer seine eigene Brille unter der Anzeigevorrichtung tragen kann, muss für die Position eine wahrscheinlichste Position angenommen werden, die zwischen dem Brillenglas 3 der Anzeigevorrichtung 1 und dem Auge des Benutzers liegt. Im einfachsten Fall gibt der Benutzer nur die Dioptrien-Stärke mit oder ohne Angabe des Glasmaterials seiner Brille an. Hierbei werden für fehlende benötigte Parameter die wahrscheinlichsten Annahmen gemacht. Damit kann zwar keine ganz optimale Korrektur berechnet werden. Es ist jedoch möglich, die prinzipiell auftretenden Aberrationen zu berechnen und diese dann zumindest in der Darstellung zu verringern.

Bei Anzeigevorrichtungen 1, die es ermöglichen, die eigene Brille mit Stärkeglas unter der Anzeigevorrichtung 1 zu tragen, ist es möglich, beim Grundkalibrierungsablauf von dem Bildverarbeitungsalgorithmus nicht nur die Anzeigevorrichtung 1 und die Augen detektieren zu lassen, sondern auch die unbekannte Brillenfassung. Dem Fachmann sind Methoden bekannt, aus Fotos Fassungsränder zu ermitteln. Es wird beispielshalber auf die europäische Patentanmeldung Nr. 17153651.9 verwiesen.

Bei der bisher beschriebenen Ausführungsform der erfindungsgemäßen Anzeigevorrichtung 1 erfolgt die Einspiegelung des virtuellen Bildes in das Gesichtsfeld des Benutzers über das rechte Brillenglas 3. Natürlich ist auch eine Einspiegelung über das linke Brillenglas 4 möglich. Dies kann alternativ oder zusätzlich zur Einspiegelung über das rechte Brillenglas 3 durchgeführt werden. Die benutzerindividuelle Kalibrierung wird für das bzw. die benutzten Brillengläser 3 und 4 durchgeführt. Wenn die Einspiegelung über beide Brillengläser 3, 4 erfolgt kann ein dreidimensionaler Bildeindruck bereitgestellt werden.

Die Brillengläser 3, 4 können eine Brechkraft von Null oder eine von Null verschiedene Brechkraft (insbesondere zur Korrektur von Fehlsichtigkeiten) aufweisen.

Die Haltevorrichtung 2 muss nicht als brillenartige Haltevorrichtung ausgebildet sein. Es ist auch jede andere Art der Haltevorrichtung möglich, mit der ein Aufsetzen oder Tragen der Anzeigevorrichtung 1 auf dem Kopf des Benutzers erfolgen kann.

## Patentansprüche

1. Verfahren zur benutzerindividuellen Kalibrierung einer auf den Kopf eines Benutzers aufsetzbaren Anzeigevorrichtung,
wobei die Anzeigevorrichtung eine auf den Kopf eines Benutzers aufsetzbare Haltevorrichtung (2),
eine an der Haltevorrichtung befestigte Kamera (20),
ein an der Haltevorrichtung (2) befestigtes Bilderzeugungsmodul (5), das ein Bild erzeugt, und
eine an der Haltevorrichtung (2) befestige Abbildungsoptik (7) aufweist, die das erzeugte Bild im auf dem Kopf des Benutzers aufgesetzten Zustand der Haltevorrichtung (2) so abbildet, dass es der Benutzer mit mindestens einem Auge wahrnehmen kann,
wobei bei dem Verfahren
A) in einem Grundkalibrierungsablauf im auf dem Kopf des Benutzers aufgesetzten Zustand der Haltevorrichtung die Position des mindestens einen Auges relativ zur Anzeigevorrichtung ermittelt und in der Anzeigevorrichtung als Justierdaten so abgelegt wird, dass das Bilderzeugungsmodul das Bild unter Berücksichtigung der Justierdaten erzeugt,
**dadurch gekennzeichnet, dass**
das Verfahren zur benutzerindividuellen Kalibrierung für eine auf den Kopf eines Benutzers aufsetzbaren Anzeigevorrichtung für eine augmentierte Darstellung ausgelegt ist,
die Abbildungsoptik (7) das erzeugte Bild im auf dem Kopf des Benutzers aufgesetzten Zustand der Haltevorrichtung (2) so abbildet, dass es der Benutzer mit dem mindestens einen Auge als virtuelles Bild in Überlagerung mit der realen Umgebung wahrnehmen kann, und
im Grundkalibrierungsablauf im auf dem Kopf des Benutzers aufgesetzten Zustand der Haltevorrichtung die Position des mindestens einen Auges in allen drei Raumrichtungen relativ zur Anzeigevorrichtung ermittelt wird,
wobei
B) in einem Feinkalibrierungsablauf im auf dem Kopf des Benutzers aufgesetzten Zustand der Haltevorrichtung
B1) dem Benutzer als virtuelles Bild ein virtueller Marker so dargeboten wird, dass der virtuelle Marker basierend auf den in der Anzeigevorrichtung abgelegten Justierdaten möglichst nahe an einer vorgegebenen Stelle eines realen Objektes dargestellt ist, und
B2) basierend auf Positionierangaben, die eine Relativbewegung des virtuellen Markers und des realen Objekts angeben, um für den Benutzer eine möglichst exakte Überlagerung des virtuellen Markers mit der vorgegebenen Stelle des realen Objektes zu erzielen, Korrekturdaten abgeleitet werden,
B3) nach Durchführung der Schritte B1) und B2) die Justierdaten mit den so gewonnenen Korrekturdaten korrigiert und als neue Justierdaten in der Anzeigevorrichtung abgelegt werden.

2. Verfahren nach Anspruch 1, bei dem im Schritt B2) des Feinkalibrierungsablaufs die Positionierangaben für mindestens zwei verschiedene vorgegebene Stellen des realen Objektes bei der Ableitung der Korrekturdaten berücksichtigt werden.

3. Verfahren nach Anspruch 1 oder 2, bei dem die im Grundkalibrierungsablauf ermittelte Position des mindestens einen Auges relativ zur Anzeigevorrichtung und/oder die Positionierangaben gemäß Schritt B2) des Feinkalibrierungsablaufs genutzt werden, um eine blickwinkelabhängige Aberration durch eine entgegengesetzte Vorverzerrung bei der Bilderzeugung zu verringern.

4. Verfahren nach einem der Ansprüche 1 bis 3, bei dem die im Grundkalibrierungsablauf ermittelte Position des mindestens einen Auges relativ zur Anzeigevorrichtung und/oder die Positionierangaben gemäß Schritt B2) des Feinkalibrierungsablaufs genutzt werden, um einen bei der Bilderzeugung auftretenden Parallaxe-Fehler aufgrund der unterschiedlichen Positionen von Auge und Kamera zu verringern.

5. Verfahren nach Anspruch 1, bei dem die im Grundkalibrierungsablauf ermittelte Position des mindestens einen Auges relativ zur Anzeigevorrichtung genutzt wird, um eine blickwinkelabhängige Aberration durch eine entgegengesetzte Vorverzerrung bei der Bilderzeugung zu verringern.

6. Verfahren nach einem der obigen Ansprüche, bei dem zur Ermittlung der Positionierangaben Positionieranweisungen, die der Benutzer über eine Eingabeschnittstelle eingegeben hat, um den virtuellen Marker für sich möglichst exakter Überlagerung mit der vorgegebenen Stelle des realen Objektes zu bringen, ausgewertet werden.

7. Verfahren nach einem der obigen Ansprüche, bei dem zur Ermittlung der Positionierangaben Aufnahmen der Kamera (20) ausgewertet werden.

8. Verfahren nach einem der obigen Ansprüche, bei dem im Schritt A) mindestens eine Aufnahme des Benutzers mit aufgesetzter Anzeigevorrichtung zur Ermittlung der Position des mindestens einen Auges ausgewertet wird.

9. Verfahren nach Anspruch 8, bei dem die mindestens eine Aufnahme mittels der Kamera (20) aufgenommen wird.

## Claims

1. A method for user-specific calibration of a display apparatus placeable on the head of a user,
wherein the display apparatus comprises a holding apparatus (2) which is placeable on the head of a user,
a camera (20) attached to the holding apparatus,
an image generating module (5) that is attached to the holding apparatus (2) and generates an image, and
an imaging optical unit (7) that is attached to the holding apparatus (2) and depicts the generated image when the holding apparatus (2) is in the state in which it is placed on the head of the user in such a way that the user can perceive it with at least one eye,
wherein in the method
A) in a basic calibration procedure in the state of the holding apparatus in which it is placed on the head of the user, the position of the at least one eye relative to the display apparatus is ascertained and is stored in the display apparatus as adjustment data such that the image generating module generates the image taking into account the adjustment data,
**characterized in that**
the method for user-specific calibration of a display apparatus placeable on the head of a user is configured for an augmented presentation,
the imaging optical unit (7) depicts the generated image when the holding apparatus (2) is in the state in which it is placed on the head of the user in such a way that the user can perceive it with at least one eye as a virtual image in overlay with the real environment, and
in the basic calibration procedure in the state of the holding apparatus in which it is placed on the head of the user, the position of the at least one eye is ascertained in all three spatial directions relative to the display apparatus,
wherein
B) in a fine calibration procedure in the state of the holding apparatus in which it is placed on the head of the user
B1) a virtual marker is shown to the user as a virtual image in such a way that the virtual marker is presented as close as possible to a specified location of a real object based on the adjustment data stored in the display apparatus, and
B2) correction data are derived on the basis of positioning information which specifies a relative movement of the virtual marker and the real object in order to attain for the user an overlay of the virtual marker with the specified location of the real object that is as exact as possible,
B3) after carrying out steps B1) and B2), the adjustment data are corrected with the correction data obtained in this way and are stored in the display apparatus as new adjustment data.

2. The method as claimed in claim 1, in which, in step B2) of the fine calibration procedure, the positioning information for at least two different specified locations of the real object are taken into account when deriving the correction data.

3. The method as claimed in claim 1 or 2, in which the position, ascertained in the basic calibration procedure, of the at least one eye relative to the display apparatus and/or the positioning information according to step B2) of the fine calibration procedure is used to reduce a viewing-angle-dependent aberration by an opposite pre-distortion during image generation.

4. The method as claimed in one of claims 1 to 3, in which the position, ascertained in the basic calibration procedure, of the at least one eye relative to the display apparatus and/or the positioning information according to step B2) of the fine calibration procedure is used in order to reduce a parallax error that occurs during image generation on the basis of the different positions of the eye and camera.

5. The method as claimed in claim 1, in which the position, ascertained in the basic calibration procedure, of the at least one eye relative to the display apparatus is used to reduce a viewing-angle-dependent aberration by an opposite pre-distortion during the image generation.

6. The method as claimed in one of the above claims, in which positioning instructions that the user has input via an input interface in order to bring the virtual marker itself into an overlay with the specified location of the real object that is as exact as possible are evaluated to ascertain the positioning information.

7. The method as claimed in one of the above claims, in which recordings of the camera (20) are evaluated in order to ascertain the positioning information.

8. The method as claimed in one of the above claims, in which in step A) at least one recording of the user with a worn display apparatus is evaluated to ascertain the position of the at least one eye.

9. The method as claimed in claim 8, in which the at least one recording is taken by means of the camera (20).

## Revendications

1. Procédé d'étalonnage, spécifique à l'utilisateur, d'un dispositif d'affichage pouvant être placé sur la tête d'un utilisateur,
le dispositif d'affichage comportant
un dispositif de retenue (2) pouvant être placé sur la tête d'un utilisateur,
une caméra (20) fixée au dispositif de retenue,
un module de génération d'image (5) qui est fixé au dispositif de retenue (2) et qui génère une image, et une optique de reproduction (7) qui est fixée au dispositif de retenue (2) et qui reproduit l'image générée lorsque le dispositif de retenue (2) est placé sur la tête de l'utilisateur de sorte que l'utilisateur puisse la percevoir avec au moins un œil,
dans le procédé
A) dans un processus d'étalonnage de base lorsque le dispositif de retenue est placé sur la tête de l'utilisateur, la position de l'au moins un œil par rapport au dispositif d'affichage étant déterminée et stockée dans le dispositif d'affichage comme données de réglage de sorte que le module de génération d'image génère l'image en tenant compte des données de réglage, **caractérisé en ce que**
le procédé d'étalonnage spécifique à l'utilisateur est conçu pour un dispositif d'affichage qui peut être placé sur la tête d'un utilisateur et qui est destiné à une représentation augmentée,
l'optique de reproduction (7) représente l'image générée lorsque le dispositif de retenue (2) est placé sur la tête de l'utilisateur de sorte que l'utilisateur puisse la percevoir avec au moins un œil comme une image virtuelle superposée à l'environnement réel, et dans le processus d'étalonnage de base lorsque le dispositif de retenue est placé sur la tête de l'utilisateur, la position de l'au moins un œil est déterminé dans les trois directions spatiales par rapport au dispositif d'affichage,
B) dans un processus d'étalonnage fin lorsque le dispositif de retenue est placé sur la tête de l'utilisateur,
B1) un marqueur virtuel étant présenté à l'utilisateur sous la forme d'une image virtuelle de sorte que le marqueur virtuel est représenté aussi près que possible d'un emplacement spécifié d'un objet réel sur la base des données de réglage stockées dans le dispositif d'affichage, et
B2) des données de correction étant déduites sur la base d'informations de positionnement qui spécifient un mouvement relatif du marqueur virtuel et de l'objet réel afin d'obtenir la superposition la plus exacte possible du marqueur virtuel à l'emplacement spécifié de l'objet réel pour l'utilisateur,
B3) après que les étapes B1) et B2) ont été réalisées, les données de réglage étant corrigées avec les données de correction ainsi obtenues et étant stockées comme nouvelles données de réglage dans le dispositif d'affichage.

2. Procédé selon la revendication 1, dans lequel, à l'étape B2) du processus d'étalonnage fin, les informations de positionnement d'au moins deux emplacements spécifiés différents de l'objet réel sont prises en compte lors de la déduction des données de correction.

3. Procédé selon la revendication 1 ou 2, dans lequel la position de l'au moins un œil par rapport au dispositif d'affichage déterminée lors du processus d'étalonnage de base et/ou les informations de positionnement à l'étape B2) du processus d'étalonnage fin sont utilisées pour réduire une aberration dépendante de l'angle d'observation par une prédistorsion opposée lors de la génération d'image.

4. Procédé selon l'une des revendications 1 à 3, dans lequel la position de l'au moins un œil par rapport au dispositif d'affichage, déterminée dans le processus d'étalonnage de base, et/ou les informations de positionnement à l'étape B2) du processus d'étalonnage fin sont utilisées pour réduire une erreur de parallaxe se produisant lors de la génération d'image en raison des différentes positions de l'œil et de la caméra.

5. Procédé selon la revendication 1, dans lequel la position de l'au moins un œil par rapport au dispositif d'affichage, déterminée dans le processus d'étalonnage de base, est utilisée pour réduire une aberration dépendante de l'angle d'observation par une prédistorsion opposée lors de la génération d'image.

6. Procédé selon l'une des revendications précédentes, dans lequel, pour déterminer les informations de positionnement, des instructions de positionnement que l'utilisateur a saisies par le biais d'une interface de saisie sont évaluées afin de superposer le plus précisément possible le marqueur virtuel à l'emplacement spécifié de l'objet réel.

7. Procédé selon l'une des revendications précédentes, dans lequel les enregistrements de la caméra (20) sont évalués pour déterminer les informations de positionnement.

8. Procédé selon l'une des revendications précédentes, dans lequel à l'étape A) au moins un enregistrement de l'utilisateur avec le dispositif d'affichage en place est évalué pour déterminer la position de l'au moins un œil.

9. Procédé selon la revendication 8, dans lequel l'au moins un enregistrement est effectué au moyen de la caméra (20).
